## Europäisches Patentamt
## European Patent Office
## Office européen des brevets

(19)

(11) Numéro de publication: **0 296 083 B1**

(12) **FASCICULE DE BREVET EUROPEEN**

(45) Date de publication du fascicule du brevet:
**10.10.90**

(51) Int. Cl.⁵: **B60N 3/00**

(21) Numéro de dépôt: **88440019.3**

(22) Date de dépôt: **16.03.88**

(54) **Plateau de bord notamment destiné aux véhicules.**

(30) Priorité: **04.05.87 FR 8706526**

(43) Date de publication de la demande:
**21.12.88 Bulletin 88/51**

(45) Mention de la délivrance du brevet:
**10.10.90 Bulletin 90/41**

(84) Etats contractants désignés:
**AT BE CH DE ES GB GR IT LI LU NL SE**

(56) Documents cités:
**US-A- 2 669 495**
**US-A- 2 692 174**
**US-A- 2 833 334**
**US-A- 3 166 354**
**US-A- 3 185 113**

(73) Titulaire: **Vandamme, Georges, 293, rue Fouquet Lelong, F-59700 Marcq-en-Baroeul (Nord)(FR)**

(72) Inventeur: **Vandamme, Georges, 293, rue Fouquet Lelong, F-59700 Marcq-en-Baroeul (Nord)(FR)**

(74) Mandataire: **Lepage, Jean-Pierre, Cabinet Lepage & Aubertin Innovations et Prestations 23/25, rue Nicolas Leblanc B.P. 1069, F-59011 Lille Cédex 1 (Nord)(FR)**

## Description

L'invention est relative à un plateau de bord destiné notamment à améliorer le confort des véhicules de tourisme.

Bien que l'invention ait été plus particulièrement développée dans le cadre des véhicules de tourisme munis d'accoudoirs, elle pourra également s'étendre à d'autres moyens de locomotion, tels que le chemin de fer, et, présentant des sièges comportant un élément d'appui semblable en forme à un accoudoir.

De plus en plus dans la fabrication des voitures modernes, le constructeur propose à sa clientèle un modèle de base, les différents accessoires susceptibles d'agrémenter le véhicule étant montés en option. Ceci permet de commercialiser la voiture avec un prix de départ minimum, charge à l'intéressé d'équiper la voiture en fonction de ses goûts.

Autrefois, les passagers arrière d'une voiture bénéficiaient d'une tablette fixée au dossier du siège avant dans lequel elle pouvait s'escamoter lorsqu'elle n'était pas utilisée. Cette tablette était pratique car elle permettait d'entreposer différents objets à portée de main.

Actuellement, ce type de tablette peut être achetée comme accessoire et doit être rapportée au siège avant du véhicule. Généralement, sa fixation se fait au niveau du point d'ancrage des appuis-tête.

Ces tablettes donnent satisfaction aux utilisateurs essentiellement lorsqu'ils font un usage personnel de la tablette. Par contre, si l'usage est partagé entre les passagers arrière du véhicule, alors la tablette de dossier est mal disposée car elle est nécessairement placée en face de l'un des passagers et non pas entre les deux.

A titre d'exemple, si les passagers désirent jouer à un jeu de société, tel que jeu de dames, jeu d'échecs, jeu de cartes ou autres, il faut que ce jeu soit disposé entre les deux joueurs afin que chacun d'eux puisse avoir une bonne vision des pions, pièces ou cartes. Ce n'est pas le cas si l'on place le jeu sur une tablette de dossier car l'un des joueurs est nettement plus éloigné du jeu que l'autre.

L'idéal serait de disposer d'une surface d'appui placée entre les occupants des sièges arrière du véhicule. En admettant que l'on veuille disposer un plateau traditionnel sur l'accoudoir arrière d'une voiture, on pourrait bénéficier d'une surface d'appui qui pourrait facilement être partagée et particulièrement bien placée pour recevoir un jeu de société.

Toutefois, il s'avère qu'un plateau traditionnel n'est guère adapté à ce genre d'emploi. En effet, les trépidations de la route font qu'il manque de stabilité et par ailleurs les dimensions conventionnelles d'un accoudoir ne procurent pas un équilibre satisfaisant de la surface du plateau. Aussi, dans ces conditions, les accessoires existants ne sont pas adaptés pour la mise en oeuvre d'une surface stable partagée entre les occupants d'un véhicule.

Le but principal de la présente invention est de présenter un plateau de bord qui puisse être disposé entre les occupants arrière d'un véhicule doté d'un accoudoir avec toutes les garanties d'équilibre et de stabilité nécessaires notamment pour recevoir une charge décentrée en présence de trépidations occasionnées par la route.

L'utilisation du plateau de bord de la présente invention est particulièrement bien adaptée pour recevoir les jeux de société ainsi que tous les aliments et boissons nécessaires à un pique-nique.

Un autre but de la présente invention est de présenter un plateau de bord de construction standard c'est-à-dire susceptible de s'adapter quelle que soit la configuration de l'accoudoir rencontré. Cette caractéristique est particulièrement intéressante sur le plan commercial afin d'offrir au public un seul produit. D'autre part, l'automobiliste pourra récupérer le plateau de bord en cas de changement de véhicule.

Sur le plan pratique, le montage et le démontage du plateau de bord de la présente invention ne nécessitent aucun outillage et se font très rapidement. Par conséquent, sa mise en place sera réalisée en cas de besoin sinon il pourra être rangé pour ne pas encombrer inutilement.

D'autres buts et avantages de la présente invention apparaitront au cours de la description qui va suivre qui n'est cependant donnée qu'à titre indicatif et qui n'a pas pour but de la limiter.

Selon la présente invention, le plateau de bord destiné notamment à améliorer le confort des véhicules de tourisme dotés d'accoudoirs en offrant aux passagers une surface d'appui sur laquelle ils peuvent faire reposer des objets est caractérisé par le fait qu'il présente des moyens de fixation à l'accoudoir du véhicule et des moyens de stabilisation.

L'invention sera mieux comprise à la lecture de la description suivante accompagnée de dessins en annexe parmi lesquels:

- la figure 1 illustre la disposition du plateau de bord de la présente invention,
- la figure 2 schématise la mise en place des moyens de fixation du plateau de bord à l'accoudoir,
- la figure 3 représente une vue du dos du plateau de bord de la présente invention,
- la figure 4 schématise la mise en oeuvre d'un premier mode de réalisation des moyens de stabilisation du tableau de bord,
- la figure 5 représente une seconde mise en oeuvre des moyens de stabilisation de la présente invention,
- la figure 6 schématise une version plus élaborée des moyens de stabilisation selon la présente invention.

La présente invention vise un plateau de bord qui trouvera notamment son application pour améliorer le confort des véhicules de tourisme dotés d'accoudoirs.

Actuellement, on connait l'usage de la tablette rabattable fixée au dossier des sièges avant de voitures, qui offre une surface d'appui pour entreposer des objets.

La disposition de ces tablettes fait qu'elles sont strictement personnelles car placées en vis-à-vis de l'occupant du siège arrière. Elles peuvent difficilement être partagées et sont tout à fait inadaptées par exemple pour se prêter à un jeu de société tel que jeu de dames, jeu d'échecs ou jeu de cartes pour lesquels il faut entreposer le jeu entre les joueurs.

Cette position idéale est précisément occupée par l'accoudoir des sièges arrière de voitures.

Malheureusement, les dimensions des accoudoirs sont mal adaptées pour recevoir sur leur surface un plateau conventionnel. Celui-ci serait instable et manquerait de tomber à chaque mouvement de la voiture.

Précisément, le plateau de bord de la présente invention a pour fonction de remédier à ces inconvénients.

En effet, selon la présente invention, on cherche à obtenir une fixation du plateau qui lui procure une bonne stabilité avec un équilibre renforcé.

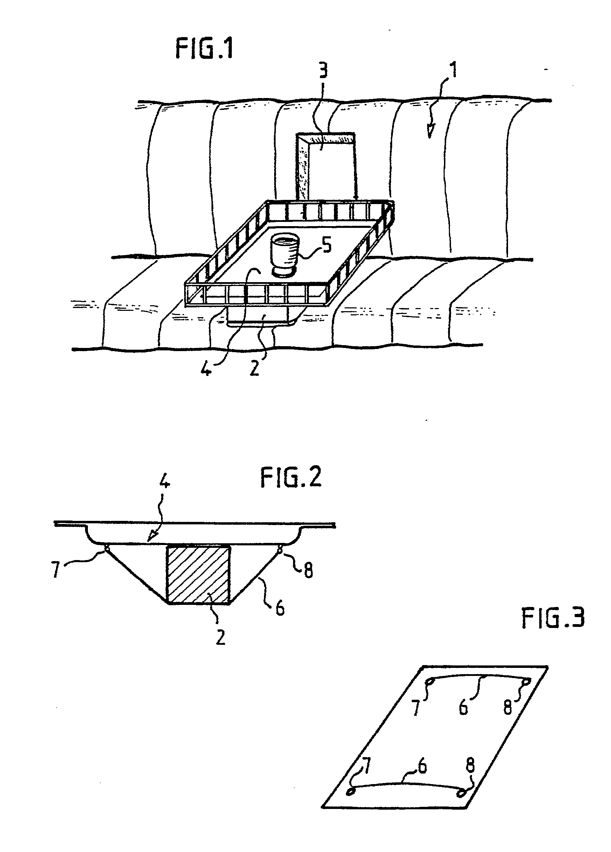

La figure 1 schématise les sièges arrière 1 d'un véhicule muni d'un accoudoir 2. L'accoudoir 2 est placé dans la partie centrale de la banquette et il peut être rabattu dans un logement 3 découpé dans le dossier. Cette disposition est très fréquemment rencontrée sur les véhicules de tourisme.

Le plateau de bord 4 de la présente invention est destiné à être posé sur l'accoudoir 2 de telle sorte qu'il soit placé entre les places respectives des passagers arrière du véhicule. Sur le plateau 4, chacun des passagers peut placer des objets 5 tels qu'un verre, jeu de société ou autres. Il faut souligner que les dimensions du plateau 4 peuvent largement déborder celles de l'accoudoir 2.

Selon la caractéristique essentielle de la présente invention, le plateau de bord 4 présente des moyens de fixation à l'accoudoir 2 du véhicule et des moyens de stabilisation.

Les moyens de fixation servent à éviter que le plateau ne puisse tomber en cas de freinage par exemple du véhicule et les moyens de stabilisation évitent que la surface du plateau 4 ne puisse basculer si l'on y pose une charge décentrée.

Selon l'invention, pour la fixation du plateau, le dit accoudoir est pris en sandwich entre d'une part le plateau et d'autre part les dits moyens de fixation.

La figure 2 schématise un mode de réalisation de ces moyens de fixation. Ils se présentent sous la forme de cordons 6 souples dont les extrémités 7 et 8 sont fixées sur le fond du plateau 4, la longueur des cordons 6 est variable pour s'adapter au format de l'accoudoir 2 autour duquel ils sont passés.

Des essais ont montré que l'emploi d'un ou deux cordons tels qu'illustrés à la figure 3 sont suffisants pour assurer la fixation du plateau 4 sur l'accoudoir 2. En ce qui concerne le réglage de la longueur des cordons 6, on pourra par exemple utiliser une boucle avec une glissière pour en bloquer la longueur.

Cependant, pour des raisons de commodité, il est préférable d'utiliser des cordons 6 élastiques qui s'adaptent automatiquement en longueur aux dimensions de l'accoudoir 2.

Cette simple fixation du plateau 4 sur l'accoudoir 2 s'est révélée insuffisante pour garantir la stabilité du plateau 4 sur l'accoudoir 2 en particulier l'équilibre du plateau 4 ne peut être maintenu si l'on place une charge qui crée un fort couple de basculement.

Selon l'invention, en dissociant les deux fonctions à savoir fixation et stabilisation, on procure au plateau une excellente stabilité et un équilibre renforcé.

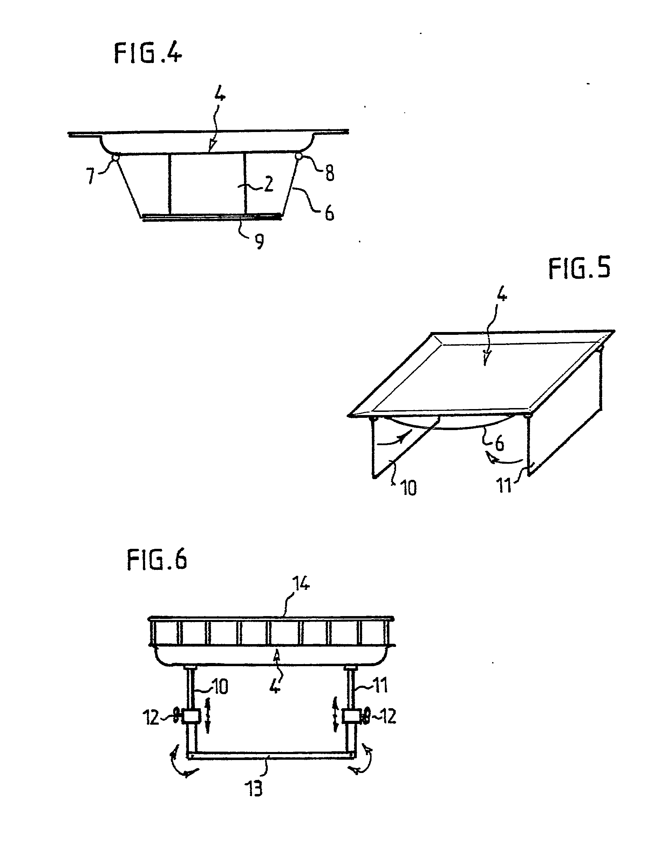

C'est pourquoi, le plateau de bord de la présente invention est doté de moyens de stabilisation qui se présentent sous la forme de tubes 9, tels qu'illustrés à la figure 4, dont la longueur correspond sensiblement à la largeur du plateau et dans lesquels les cordons 6 sont enfilés. Ces moyens de stabilisation 9 ont l'avantage d'être simples et efficaces. Il faut toutefois que l'accoudoir 2 présente dans sa partie inférieure un profil plat.

La figure 5 illustre un second mode de réalisation des moyens de stabilisation. Ces moyens se présentent sous la forme de béquilles latérales 10 et 11 fixées au plateau 4, les dites béquilles 10 et 11 étant destinées à s'appuyer à la surface du siège 1.

L'avantage de cette réalisation est qu'elle est indépendante de la forme de l'accoudoir 2. La stabilité du plateau 4 est assurée en toute circonstance. Cependant, la présence des béquilles latérales 10 et 11 augmente les dimensions du plateau de bord qui peut ainsi plus difficilement être rangé. Cet inconvénient peut être surmonté en utilisant des béquilles latérales 10 et 11 articulées de telle sorte qu'elles peuvent être repliées sous la surface du plateau 4 après utilisation.

Il faut également noter que bien souvent le profil des sièges 1 est galbé, aussi, pour que les béquilles latérales 10 et 11 puissent correctement s'appuyer à la surface du siège 1, elles présentent de préférence un profil correspondant à celui des sièges 1, hauteur différente à l'avant et à l'arrière.

Il est également souhaitable que les béquilles latérales 10 et 11 présentent une large surface d'appui afin de ne pas risquer de perforer le tissu de la banquette.

L'inconvénient des béquilles latérales 10 et 11 dont le profil est adapté à celui du siège est qu'elles sont plus ou moins spécifiques à une catégorie de véhicules.

Aussi, pour standardiser la fabrication est-il préférable d'adopter dans ce cas la réalisation préconisée de la figure 6 dans laquelle les béquilles latérales 10 et 11 sont télescopiques afin de s'adapter en hauteur au profil du siège rencontré. Une fois la longueur fixée atteinte, des écrous 12 bloquent la longueur des béquilles latérales.

Les béquilles latérales sont reliées par une traverse articulée 13 qui peut ainsi épouser la forme du siège.

La traverse 13 assure également une bonne répartition de la charge.

De préférence, le plateau 4 présente une réhausse de rebord 14 pour éviter que les objets disposés à sa surface ne puissent tomber lors des mouvements brusques du véhicule.

On pourra également concevoir une surface du plateau 4 spécialisée pour maintenir les objets à sa surface. Par exemple, une découpe appropriée pourrait servir à immobiliser un verre.

## Revendications

1. Plateau de bord, destiné notamment à améliorer le confort des véhicules de tourisme dotés d'accoudoirs (2) en offrant aux passagers une surface d'appui sur laquelle ils peuvent faire reposer des objets (5), caractérisé par le fait qu'il présente des moyens de fixation (6) à l'accoudoir (2) du véhicule et des moyens de stabilisation (9, 10, 11).

2. Plateau de bord selon la revendication 1, caractérisé par le fait que les moyens de fixation se présentent sous la forme de cordons (6) souples dont les extrémités (7) et (8) sont fixées sur le fond du plateau (4), de longueurs variables pour s'adapter au format de l'accoudoir (2) autour duquel ils sont passés.

3. Plateau de bord selon la revendication 2, caractérisé par le fait que les moyens de fixation se présentent sous la forme de cordons élastiques (6).

4. Plateau de bord selon la revendication 2 ou 3, caractérisé par le fait que les moyens de stabilisation se présentent sous la forme de tubes (9) dont la longueur correspond sensiblement à la largeur du plateau (4), dans lesquels les cordons (6) sont enfilés.

5. Plateau de bord selon la revendication 1, caractérisé par le fait que les moyens de stabilisation se présentent sous la forme de béquilles latérales (10) et (11) fixées au plateau (4) et qui s'appuient sur le siège (1).

6. Plateau de bord selon la revendication 5, caractérisé par le fait que les béquilles latérales (10) et (11) sont articulées pour pouvoir être repliées sous la surface du plateau (4).

7. Plateau de bord selon la revendication 5, caractérisé par le fait que les béquilles latérales (10) et (11) présentent un profil correspondant à celui des sièges (1).

8. Plateau de bord selon la revendication 5, caractérisé par le fait que les béquilles latérales (10) et (11) sont télescopiques.

9. Plateau de bord selon la revendication 8, caractérisé par le fait que les béquilles latérales (10) et (11) sont reliées par une traverse (13) articulée.

10. Plateau de bord selon la revendication 1, caractérisé par le fait que la périphérie du plateau (4) est bordée par une rehausse (14).

## Patentansprüche

1. Bordbrett, nämlich dazu bestimmt, die Bequemlichkeit der mit Armstützen (2) versehenen Personenwagen zu erhöhen, indem es den Insassen eine Stützfläche bietet, auf die sie Gegenstände (5) abstellen können, dadurch gekennzeichnet, daß es Mittel (6) zur Befestigung an die Armstütze (2) des Fahrzeugs und Stabilisierungsmittel (9, 10, 11) aufweist.

2. Bordbrett nach Anspruch 1, dadurch gekennzeichnet, daß die Befestigungsmittel als weiche Schnüre (6) gestaltet sind, deren Enden (7) und (8) am Boden des Bretts (4) befestigt sind, mit änderlichen Längen, um der Größe der Armstütze (2), um die sie herum geführt werden, angepaßt zu werden.

3. Bordbrett nach Anspruch 2, dadurch gekennzeichnet, daß die Befestigungsmittel als elastische Schnüre (6) gestaltet sind.

4. Bordbrett nach Anspruch 2 oder 3, dadurch gekennzeichnet, daß die Stabilisierungsmittel als Rohre (9) gestaltet sind, deren Länge im wesentlichen der Breite des Bretts (4) entspricht, in denen die Schnüre (6) eingeführt sind.

5. Bordbrett nach Anspruch 1, dadurch gekennzeichnet, daß die Stabilisierungsmittel als am Brett (4) befestigte, seitliche Stützen (10) und (11) gestaltet sind, die an den Sitz (1) anlehnen.

6. Bordbrett nach Anspruch 5, dadurch gekennzeichnet, daß die seitlichen Stützen (10) und (11) gelenkt sind, um unter der Fläche des Bretts (4) zusammengeklappt werden zu können.

7. Bordbrett nach Anspuch 5, dadurch gekennzeichnet, daß die seitlichen Stützen (10) und (11) einen Profil, der demjenigen der Sitze (1) entspricht, aufweist.

8. Bordbrett nach Anspruch 5, dadurch gekennzeichnet, daß die seitlichen Stützen (10) und (11) teleskopisch sind.

9. Bordbrett nach Anspruch 8, dadurch gekennzeichnet, daß die seitlichen Stützen (10) und (11) mittels eines gelenkten Querstücks (13) verbunden sind.

10. Bordbrett nach Anspruch 1, dadurch gekennzeichnet, daß der Umkreis des Bretts (4) von einer Erhöhung (14) umgeben ist.

## Claims

1. On-board tray, designed in particular to improve the comfort of passenger vehicles fitted with armrests (2) by offering the passengers a supporting surface on which they can rest objects (5), characterized by the fact that it has means (6) for securing to the armrest (2) of the vehicle and stabilizing means (9, 10, 11).

2. On-board tray according to claim 1, characterized by the fact that the securing means take the form of flexible cords (6) the ends (7 and 8) of which are secured to the bottom of the tray (4), of variable lengths to adapt to the dimensions of the armrest (2) around which they are passed.

3. On-board tray according to claim 2, characterized by the fact that the securing means take the form of elastic cords (6).

4. On-board tray according to claim 2 or 3, characterized by the fact that the stabilizing means take the form of tubes (9) the length of which corresponds substantially to the width of the tray (4), through which the cords (6) are threaded.

5. On-board tray according to claim 1, characterized by the fact that the stabilizing means take the form of lateral props (10 and 11) secured to the tray (4) and which rest on the seat (1).

6. On-board tray according to claim 5, characterized by the fact that the lateral props (10 and 11) are hinged so that they can be folded back beneath the surface of the tray (4).

7. On-board tray according to claim 5, characterized by the fact that the lateral props (10 and 11) have a profile corresponding to that of the seats (1).

8. On-board tray according to claim 5, characterized by the fact that the lateral props (10 and 11) are telescopic.

9. On-board tray according to claim 8, characterized by the fact that the lateral props (10 and 11) are connected together by an articulated cross member (13).

10. On-board tray according to claim 1, characterized by the fact that the periphery of the tray (4) is bordered by a raised edge (14).

FIG.1

FIG.2

FIG.3

FIG.4

FIG.5

FIG.6